# EUROPÄISCHE PATENTSCHRIFT

(11) **EP 1 998 060 B1**
(45) Veröffentlichungstag und Bekanntmachung des Hinweises auf die Patenterteilung: **18.12.2013**
(21) Anmeldenummer: 08009778.5
(22) Anmeldetag: 29.05.2008
(51) Int. Cl.: F16C 35/04

(54) **Lageranordnung**
Storage assembly
Agencement de stockage

(30) Priorität: 01.06.2007 DE 102007025644
(43) Veröffentlichungstag der Anmeldung: 03.12.2008
(73) Patentinhaber: AB SKF, 415 50 Göteborg (SE)
(72) Erfinder: Hoch, Paul-Gerhard, 97456 Dittelbrunn (DE)
(74) Vertreter: Kohl, Thomas

(56) Entgegenhaltungen:
- DE-A1- 2 744 665
- DE-A1- 10 039 808
- US-A- 3 918 277
- US-A- 3 934 953
- US-A- 4 025 135
- US-A- 6 089 758

## Beschreibung

Die Erfindung betrifft eine Lageranordnung, umfassend ein äußeres Laufbahnelement eines Wälzlagers und einen Lagerträger, siehe z. B. US-A-3 934 953.

Bei vielen Maschinenbauanwendungen ist es bekannt, ein Lager radial und axial gesichert an einem, insbesondere aus Blech ausgebildeten Lagerträger anzuordnen, wobei dann der Lagerträger an einem Maschinenteil, insbesondere durch ein Verschrauben befestigt wird.

Eine Aufgabe der vorliegenden Erfindung ist es, eine Lageranordnung, umfassend ein äußeres Laufbahnelement eines Wälzlagers und einen Lagerträger derart zu schaffen, dass bei gleichzeitiger kostengünstiger Herstellbarkeit der Lagerträger dauerhaft fest befestigbar ist.

Die Aufgabe wird durch den Gegenstand des Anspruchs 1 gelöst. Vorteilhafte Ausgestaltungen sind in den Unteransprüchen beschrieben.

Die Erfindung beruht dabei auf der Erkenntnis, dass ein weitgehend aus Kunststoff ausgebildeter Lagerträger, der beispielsweise durch ein entsprechendes Umspritzen eines äußeren Laufbahnelements eines Wälzlagers hergestellt ist, einfach und kostengünstig herstellbar ist und weiterhin durch das Vorhandensein besagten Versteifungselements im Bereich der Durchdringungen dauerhaft fest an einer entsprechenden Einbauumgebung angeschraubt werden kann, wobei die Versteifungselemente ebenfalls mit eingespritzt werden können. Bei einem vergleichbaren Lagerträger, der im Bereich der Durchdringung ausschließlich aus Kunststoff ausgebildet ist, würde ein festes Anziehen von durch die Durchdringung hindurchgesteckten Schrauben, insbesondere bei geforderten höheren Anzugsmomenten mit fortschreitender Zeitdauer ein Plastifizieren des Kunststoffes einhergehen, so dass der Lagerträger nicht mehr dauerhaft fest an der Einbauumgebung befestigt bleibt. Dies wird gemäß der Erfindung durch das Vorhandensein besagten Versteifungselements, das insbesondere aus einem Metall, beispielsweise einem Blech, ausgebildet ist, verhindert. Insbesondere gegenüber einem als Metallgussmassivteil hergestellten Träger ist der im Wesentlichen aus Kunststoff ausgebildete Lagerträger gemäß der Erfindung einfacher und damit kostengünstiger herstellbar. Der Außenmantel des Laufbahnelements ist derart mit einer Struktur ausgebildet, dass das Laufbahnelement im Kunststoff fest gehalten ist, wobei die Struktur insbesondere eine schraubengangartige Nut umfasst. Dadurch wird das äußere Laufbahnelement auch bei einer am äußeren Laufbahnelement auftretenden Umfangslast dauerhaft sicher im Kunststoff gehalten, was insbesondere bei Einsatz der erfindungsgemäßen Lageranordnung zum Lagern der Trommel einer Waschmaschine von besonderem Vorteil ist.

In einer vorteilhaften Ausgestaltung ist das Versteifungselement hülsenartig ausgebildet, wobei es insbesondere an dem der Einbauumgebung zugewandten axialen Ende mit einer radial nach außen hin auskragenden Verbreiterung ausgebildet sein, deren vom Hülseninneren weg weisende Stirnfläche vom äußeren zum inneren Rand nach innen hin leicht abfallend kegelstumpfmantelartig ausgebildet ist. Dadurch bildete besagte Verbreiterung zusätzlich eine Art in Richtung der Durchdringung wirkende Axialscheibenfeder, die zusätzlich über den Zeitablauf für eine dauerhaft feste Befestigung eine notwendige Druckspannung zwischen der Einbauumgebung und dem Schraubenkopf aufrechterhält.

In einer weiteren vorteilhaften Ausgestaltung ist ein Außenmantel des Versteifungselements rotationsunsymmetrisch bzw. mit Rippen ausgebildet. Dadurch wird mit besonderem Vorteil ein Verdrehen der Hülse im Kunststoff verhindert.

Weitere Vorteile, Merkmale und Einzelheiten der Erfindung ergeben sich aus den im Folgenden beschriebenen Ausführungsbeispielen der Erfindung anhand der Figuren. Dabei zeigen:
- Figur 1: ausschnittsweise einen Längsschnitt durch eine Lageranordnung mit einem Wälzlager und einem Lagerträger, der im Bereich einer Durchdringung mit einem Versteifungselement ausgebildet ist, und
- Figur 2: einen Längsschnitt im Bereich der Durchdringung des Lagerträgers in einer gegenüber der Figur 1 anderen Ausbildung des Versteifungselements.

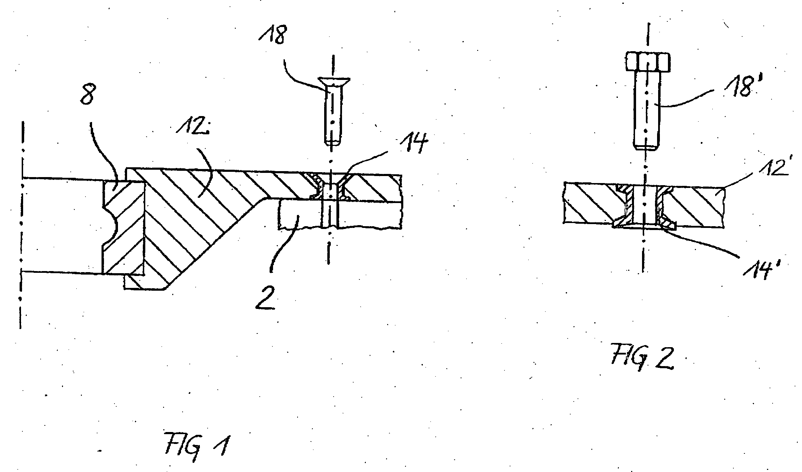

Die Figur 1 zeigt als ein Ausführungsbeispiel der Erfindung ausschnittsweise einen Längsschnitt durch einen rechten Bereich einer Lageranordnung, umfassend ein Wälzlager und einen Lagerträger, der im Bereich einer Durchdringung mit einem Versteifungselement 14 ausgebildet ist. Vom als Rillenkugellager ausgebildeten Wälzlager ist dabei lediglich dessen äußeres Laufbahnelement 8 dargestellt. Weitere Elemente des Wälzlagers, insbesondere umfassend einen Satz von als Kugeln ausgebildete Wälzkörper, ein Käfig zum darin Anordnen der Kugeln sowie ein inneres Laufbahnelement, das beispielsweise auf einer Welle einer Trommel einer Waschmaschine angeordnet ist, sind aus Gründen der Übersichtlichkeit nicht dargestellt.

Der Lagerträger umfasst dabei ein aus einem Kunststoff, insbesondere glasfaserverstärktem PP, POM und/oder Polyamid ausgebildetes Teil 12, das für ein axiales und radiales Fixieren des Laufbahnelements 8 dieses außenmantelseitig und wenigstens in Bereichen seiner beiden Stirnseiten berührend umschließt. Für ein festes Halten im Kunststoffteil 12 ist dabei der Außenmantel des Laufbahnelements 8 derart mit einer Struktur, insbesondere einer schraubengangartigen Nut ausgebildet, dass das Laufbahnelement 8 im Kunststoff fest gehalten bleibt.

Im Bereich der Durchdringung umschließt das Kunststoffteil 12 ein hülsenartiges, insbesondere aus einem Stahlblech ausgebildetes Versteifungselement 14. Durch die Durchdringung hindurch ist der Lagerträger mittels einer Schraube 18 zum Verschrauben an einer Einbauumgebung 2 vorgesehen. In seiner Ausbildung aus Stahlblech ist damit das hülsenartige Versteifungselement 14 aus einem Material ausgebildet, das eine höhere Plastifizierungsgrenze aufweist als der umgebende Kunststoff. Ferner erstreckt sich das Versteifungselement 14 in Durchdringungsrichtung in etwa gleich einem Abstand zwischen der Einbauumgebung 2 und einem zum Druck ausüben auf den Lagerträger in Durchdringungsrichtung vorgesehenen Bereich der Schraube 18, also insbesondere deren Kopf, bei bestimmungsgemäßer Befestigung des Lagerträgers an der Einbauumgebung 2. Dabei ist das Versteifungselement 14 an demjenigen axialen Ende, an dem der Kopf der Schraube 18 zum Anliegen vorgesehen ist, mit einer an den Schraubenkopf angepassten Kontur ausgebildet.

Das Kunststoffen 12 ist dabei cinstückig und materialeinheitlich ausgebildet und insbesondere durch ein Spritzgießen hergestellt, wobei beim Spritzgießen das Laufbahnelement 8 und das Versteifungselement 14 durch ein Umspritzen mit dem Kunststoff in das Kunststoffteil 12 mit eingebettet werden.

Im der Einbauumgebung 2 gegenüberliegenden stirnseitigen Bereich des hülsenartigen Versteifungselements 14 ist das Versteifungselement 14 mit einer radial nach außen hin auskragenden Verbreiterung ausgebildet, was mit Vorteil für ein vom Schraubenkopf ausgehendes Druckübertragen auf die Einbauumgebung 2 eine größere Auflagefläche zur Einbauumgebung 2 hin realisiert. Damit weiterhin das Versteifungselement 14 hinreichend fest im Kunststoffteil 12 gehalten und insbesondere gegen ein Verdrehen gegenüber dem Kunststoffteil12 gesichert ist, ist das Versteifungselement 14 außenmantelseitig mit sich in Durchdringungsrichtung erstreckenden Längsrippen ausgebildet. In anderen Ausfühmngsfonnen kann dafür auch der Außenmantel des Versteifungselements 14 rotationsunsymmetrisch ausgebildet sein

Die Figur 2 zeigt als ein weiteres Ausführungsbeispiel der Erfindung bezugnehmend auf die Figur 1 eine andere Ausgestaltung des Lagerträgers im Bereich der Durchdringung. Dabei zeigt die Figur 2 wiederum einen Längsschnitt im Bereich der Durchdringung. Gegenüber der Figur 1 unterscheidet sich dabei das Versteifungselement 14' der Figur 2 im wesentlichen dadurch, dass das Versteifungselement 14' an seiner der Einbauumgebung gegenüberliegenden Stirnseite mit einer radial nach außen hin auskragenden Verbreiterung ausgebildet ist, wobei die der Einbauumgebung zugewandte Stirnfläche der Verbreiterung vom äußeren hin zum inneren Rand nach innen hin leicht abfallend kegelstumpfmantelartig ausgebildet ist und die Verbreiterung am äußeren Rand in Durchdringungsrichtung über das Kunststoffteil 12' leicht überstehend ausgebildet ist. Damit wirkt besagte Verbreiterung in Durchdringungsrichtung ähnlich einer Axialscheibenfeder, so dass zusätzlich über den Zeitablauf eine dauerhaft feste Verbindung zwischen dem Lagerträger und der Einbauumgebung sichergestellt ist, da die derart ausgebildete Verbreiterung eine notwendige Druckspannung zwischen der Einbauumgebung und dem Schraubenkopf aufrechterhält.

Da weiterhin anders als in der Figur 1 in der Figur 2 eine Schraube 18' mit einem Schraubenkopf zum Einsatz kommt, dessen Unterseite im wesentlichen plan ausgebildet ist, ist das Versteifungselement 14' der Figur 2 an seinem dem Schraubenkopf zugewandten axialen Ende mit einer radial nach außen hin auskragenden Verbreiterung ausgebildet, die nach außen hin mit leicht abnehmender Dicke ausgebildet ist, so dass auch bei dieser Ausbildung der Schraube 18' eine gute Druckübertragung vom Schraubenkopf auf die Einbauumgebung sichergestellt ist.

Ansonsten gilt das vorausgehend zu der Figur 1 Beschriebene für die Figur 2 entsprechend. Dabei sind Bauelemente der Figur 2, die Bauelementen der Figur 1 entsprechen, mit gleichen Bezugszeichennummern, ergänzt um einen Hochstrich, bezeichnet.

## Patentansprüche

1. Lageranordnung, beinhaltend folgende Merkmale:
- ein äußeres Laufbahnelement (8) eines Wälzlagers und ein Lagerträger,
- der Lagerträger ist mit wenigstens einer Durchdringung ausgebildet, durch die hindurch der Lagerträger mittels Befestigungsmitteln an einer Einbauumgebung befestigbar ist,
- der Lagerträger umfasst ein Teil (12, 12') aus einem Kunststoff, das für ein axiales und radiales Fixieren des Laufbahnelement (8) dieses außenmantelseitig und wenigsten in Bereichen seiner beiden Stirnseiten berührend ausgebildet ist,
- ein Außenmantel des Laufbahnelements (8) ist derart mit einer Struktur ausgebildet, dass das Laufbahnelement (8) im Kunststoff festgehalten ist,
- der Lagerträger umfasst im Bereich der Durchdringung wenigstens ein Versteifungselement (14, 14'),
- das Versteifungselement (14, 14') ist aus einem Material ausgebildet, das eine höhere Plastifizierungsgrenze aufweist als der umgebende Kunststoff, und
- das Versteifungselement (14, 14') erstreckt sich in Durchdringungsrichtung in etwa gleich einem Abstand zwischen der Einbauumgebung (2) und einem, zum Druckausüben auf den Lagerträger in Durchdringungsrichtung vorgesehen Bereich der Befestigungsmittel bei bestimmungsgemäßer Befestigung.

2. Lageranordnung nach Anspruch 1, wobei das Kunststoffteil (12, 12') einstückig und/oder materialeinheitlich ausgebildet ist.

3. Lageranordnung nach einem der Ansprüche 1 oder 2, wobei das Kunststoffteil (12, 12') durch ein Spritzgießen hergestellt ist.

4. Lageranordnung nach Anspruch 3, wobei das Laufbahnelement (8) und/oder das Versteifungselement (14, 14') beim Spritzgießen durch ein Umspritzen mit eingebettet sind.

5. Lageranordnung nach einem der Ansprüche 1 bis 4, wobei der Kunststoff glasfaserverstärktes PP, POM und/oder Polyamid umfasst.

6. Lageranordnung nach einem der Ansprüche 1 bis 5, wobei das Versteifungselement (14, 14') aus einem Metall, hülsenartig und/oder mit einem rotationsunsymmetrischen Außenmantel ausgebildet ist.

7. Lageranordnung nach einem der Ansprüche 1 bis 6, wobei das Versteifungselement (14, 14') gegen ein Verdrehen der Hülse im Kunststoff außenmantelseitig mit Längsrippen ausgebildet ist.

8. Lageranordnung nach einem der Ansprüche 1 bis 7, wobei das Versteifungselement (14, 14') an wenigstens einem seiner axialen Enden mit einer radial nach außen hin auskragenden Verbreiterung, insbesondere radial nach außen hin mit abnehmender axialer Dicke ausgebildet ist.

9. Lageranordnung nach Anspruch 8, wobei die vom Versteifungselementinnern wegweisende Stirnfläche der Verbreiterung vom äußeren hin zum inneren Rand nach Innen hin abfallend, kegelstumpfmantelartig ausgebildet ist.

10. Lageranordnung nach einem der Ansprüche 1 bis 9, wobei die Befestigungsmittel eine Schraube (18, 18') umfassen.

11. Lageranordnung nach Anspruch 10, wobei der zum Druckausüben vorgesehene Bereich die Anlagefläche des Schraubenkopfes am Lagerträger ist.

12. Lageranordnung nach einem der Ansprüche 10 oder 11, wobei das Versteifungselement (14, 14') an dem axialen Ende, an dem ein Kopf der Schraube (18, 18') zum Anliegen vorgesehen ist, mit einer an den Schraubenkopf angepassten Kontur ausgebildet ist.

13. Lageranordnung nach einem der Ansprüche 1 bis 12, wobei die Struktur eine schraubengangartige Nut umfasst.

14. Lageranordnung nach einem der Ansprüche 1 bis 13, wobei das Wälzlager als ein Rillenkugellager ausgebildet ist.

15. Lageranordnung nach einem der Ansprüche 1 bis 14, wobei die Lageranordnung einer Lagerung einer Trommel einer Waschmaschine zugehört.

## Claims

1. Bearing assembly comprising the following features:
- an outer raceway element (8) of a rolling bearing and a bearing carrier,
- the bearing carrier is formed with at least one penetration, through which the bearing carrier can be fastened to an installation environment by means of fastening means,
- the bearing carrier comprises a part (12, 12') made of plastic, which is designed for axial and radial fixing of the raceway element (8), in contact with the latter on the outer casing side and at least in regions of its two end sides,
- an outer casing of the raceway element (8) is formed with a structure in such a way that the raceway element (8) is securely held in the plastic,
- the bearing carrier comprises at least one stiffening element (14, 14') in the region of the penetration,
- the stiffening element (14, 14') is formed from a material that has a higher plastification limit than the surrounding plastic, and
- the stiffening element (14, 14') extends in the direction of penetration approximately equidistant apart between the installation environment (2) and a region of the fastening means intended for exerting pressure on the bearing carrier in the direction of penetration when fastening is performed as intended.

2. Bearing assembly according to Claim 1, the plastic part (12, 12') being formed in one piece and/or from one and the same material.

3. Bearing assembly according to either of Claims 1 and 2, the plastic part (12, 12') being produced by injection moulding.

4. Bearing assembly according to Claim 3, the raceway element (8) and/or the stiffening element (14, 14') being embedded at the same time during the injection moulding by being encapsulated.

5. Bearing assembly according to one of Claims 1 to 4, the plastic comprising glass-fibre reinforced PP, POM and/or polyamide.

6. Bearing assembly according to one of Claims 1 to 5, the stiffening element (14, 14') being formed from a metal, in the manner of a sleeve and/or with a rotationally unsymmetrical outer casing.

7. Bearing assembly according to one of Claims 1 to 6, the stiffening element (14, 14') being formed with longitudinal ribs on the outer casing side to prevent twisting of the sleeve in the plastic.

8. Bearing assembly according to one of Claims 1 to 7, the stiffening element (14, 14') being formed at at least one of its axial ends with a radially outwardly projecting widening, in particular a radially outwardly decreasing axial thickness.

9. Bearing assembly according to Claim 8, the end face of the widening facing away from the interior of the stiffening element being formed in the manner of the outer surface of a truncated cone, descending from the outside inwards towards the inner periphery.

10. Bearing assembly according to one of Claims 1 to 9, the fastening means comprising a screw (18, 18').

11. Bearing assembly according to Claim 10, the region intended for exerting pressure being the abutting face of the screw head on the bearing carrier.

12. Bearing assembly according to either of Claims 10 and 11, the stiffening element (14, 14') being formed at the axial end at which a head of the screw (18, 18') is intended to abut with a contour that is adapted to the screw head.

13. Bearing assembly according to one of Claims 1 to 12, the structure comprising a groove in the manner of a screw thread.

14. Bearing assembly according to one of Claims 1 to 13, the rolling bearing being formed as a deep groove ball bearing.

15. Bearing assembly according to one of Claims 1 to 14, the bearing assembly belonging to a mounting of a washing machine.

## Revendications

1. Agencement de palier, présentant les caractéristiques suivantes :
- un élément de piste de roulement extérieur (8) d'un palier à roulement et un support de palier,
- le support de palier est réalisé avec au moins un orifice traversant, à travers lequel le support de palier peut être fixé au moyen de moyens de fixation à un environnement d'installation,
- le support de palier comprend une partie (12, 12') en matière plastique, qui est réalisée pour une fixation axiale et radiale de l'élément de piste de roulement (8) en contact avec celui-ci du côté de l'enveloppe extérieure et au moins dans des régions de ses deux côtés frontaux,
- une enveloppe extérieure de l'élément de piste de roulement (8) est réalisée avec une structure de telle sorte que l'élément de piste de roulement (8) soit maintenu fixement dans la matière plastique,
- le support de palier comprend, dans la région de l'orifice traversant, au moins un élément de renforcement (14, 14'),
- l'élément de renforcement (14, 14') est réalisé en un matériau qui présente une limite de plastification plus élevée que la matière plastique qui l'entoure, et
- l'élément de renforcement (14, 14') s'étend dans la direction de l'orifice traversant à une distance approximativement égale entre l'environnement d'installation (2) et une région des moyens de fixation prévue pour exercer une pression sur le support de palier dans la direction de l'orifice traversant, lors d'une fixation conforme.

2. Agencement de palier selon la revendication 1, dans lequel la partie en matière plastique (12, 12') est réalisée d'une seule pièce et/ou est venue de matière.

3. Agencement de palier selon l'une quelconque des revendications 1 et 2, dans lequel la partie en matière plastique (12, 12') est fabriquée par moulage par injection.

4. Agencement de palier selon la revendication 3, dans lequel l'élément de piste de roulement (8) et/ou l'élément de renforcement (14, 14') est noyé par un surmoulage lors du moulage par injection.

5. Agencement de palier selon l'une quelconque des revendications 1 à 4, dans lequel la matière plastique comprend du PP renforcé par des fibres de verre, du POM et/ou du polyamide.

6. Agencement de palier selon l'une quelconque des revendications 1 à 5, dans lequel l'élément de renforcement (14, 14') est réalisé en métal, sous forme de douille et/ou avec une enveloppe extérieure ne présentant pas une symétrie de révolution.

7. Agencement de palier selon l'une quelconque des revendications 1 à 6, dans lequel l'élément de renforcement (14, 14') est réalisé avec des nervures longitudinales du côté de l'enveloppe extérieure de manière à empêcher la rotation de la douille dans la matière plastique.

8. Agencement de palier selon l'une quelconque des revendications 1 à 7, dans lequel l'élément de renforcement (14, 14') est réalisé au niveau d'au moins l'une de ses extrémités axiales avec un élargissement faisant saillie radialement vers l'extérieur, en particulier avec une épaisseur axiale diminuant radialement vers l'extérieur.

9. Agencement de palier selon la revendication 8, dans lequel la surface frontale de l'élargissement opposée à l'intérieur de l'élément de renforcement est réalisée de manière à diminuer vers l'intérieur depuis le bord extérieur jusqu'au bord intérieur, à la manière d'une enveloppe tronconique.

10. Agencement de palier selon l'une quelconque des revendications 1 à 9, dans lequel les moyens de fixation comprennent une vis (18, 18').

11. Agencement de palier selon la revendication 10, dans lequel la région prévue pour exercer une pression est la surface d'appui de la tête de vis sur le support de palier.

12. Agencement de palier selon l'une quelconque des revendications 10 ou 11, dans lequel l'élément de renforcement (14, 14') est réalisé au niveau de l'extrémité axiale au niveau de laquelle une tête de la vis (18, 18') doit venir s'appliquer, avec un contour adapté à la tête de vis.

13. Agencement de palier selon l'une quelconque des revendications 1 à 12, dans lequel la structure comprend une rainure en forme de filet de vis.

14. Agencement de palier selon l'une quelconque des revendications 1 à 13, dans lequel le palier à roulement est réalisé sous forme de roulement rainuré à billes.

15. Agencement de palier selon l'une quelconque des revendications 1 à 14, dans lequel l'agencement de palier appartient à un support sur palier d'un tambour de machine à laver.
